Europäisches Patentamt

(19) European Patent Office

Office européen des brevets

(11) Numéro de publication: **0 144 265**
**B1**

(12) **FASCICULE DE BREVET EUROPEEN**

(45) Date de publication du fascicule du brevet: 16.09.87

(21) Numéro de dépôt: **84402421.6**

(22) Date de dépôt: **28.11.84**

(51) Int. Cl.⁴: **B 64 D 7/08**

(54) Dispositif d'emport et de largage de charges sous avion à triple échappement par galets.

(30) Priorité: **29.11.83 FR 8319041**

(43) Date de publication de la demande:
**12.06.85 Bulletin 85/24**

(45) Mention de la délivrance du brevet:
**16.09.87 Bulletin 87/38**

(84) Etats contractants désignés:
**DE GB IT SE**

(56) Documents cités:
**FR - A - 2 364 166**
**FR - A - 2 370 948**
**FR - A - 2 443 973**
**GB - A - 2 011 591**

(73) Titulaire: **R. ALKAN & Cie., Rue du 8 mai 1945,**
**F-94460 Valenton (FR)**

(72) Inventeur: **Hasquenoph, Jean, 12, rue du 27 août 1944,**
**F-77400 Lagny sur Marne (FR)**
Inventeur: **Coutin, Pierre, 117, rue du Général Michel**
**Bizot, F-75012 Paris (FR)**

(74) Mandataire: **Hud, Robert et al, Cabinet**
**COLLIGNON 6, rue de Madrid, F-75008 Paris (FR)**

# Description

L'invention se réfère à un dispositif d'emport et de largage de charges sous avion tel que défini dans le préambule de la revendication 1.

On connaît de nombreux dispositifs d'emport et de largage sous avion offrant des caractéristiques différentes selon l'utilisation qui en est faite et les performances exigées par les utilisateurs.

Le document FR-A-2 443 973, en particulier, décrit un dispositif d'emport et de largage de charges sous avion qui comprend un système d'encliquetage indépendant pour chaque crochet de suspension de la charge et un levier de déclenchement commun assurant le déverrouillage forcé et simultané des deux crochets. Dans ce dispositif le levier de déclenchement vient écarter directement les cliquets verrouillant les crochets puis repousser les genouillères associées aux crochets pour amorcer leur mouvement. Cette double action du levier de déclenchement nécessite une course assez importante et des ajustements précis et constants des divers éléments et en particulier des genouillères relativement à leur position d'arc-boutement. Une force importante de déclenchement est nécessaire, d'autant plus grande que la charge emportée est plus pesante.

Il est dans tous les cas intéressant d'imaginer des dispositifs constitués par un minimum de pièces différentes tout en permettant une mise en oeuvre rapide. A cet effet le dispositif d'emport et de largage de charges sous avion est du type à deux crochets à encliquetage indépendant avec possibilité d'orientation de la charge par rapport à l'avion (harmonisation en azimut) et de calage sur appuis fixes par relevage des crochets, et il se caractérise par un mécanisme actionné au moyen d'un électro-aimant et comportant trois échappements à galets, dont un pour chaque crochet et un troisième pour la libération d'un ressort de déclenchement.

Le dispositif objet de la présente invention rend possible l'accès des deux côtés de la charge aux commandes manuelles ci-après:
— harmonisation en azimut;
— réarmement du dispositif de déclenchement;
— encliquetage;
— commande centralisée pour le calage;
— déclenchement manuel; et
— introduction d'une broche de sécurité.

D'autre part, les mécanismes démultiplicateurs d'effort correspondant à chacun des deux crochets sont strictement identiques, leur disposition symétrique étant obtenue par simple retournement des pièces, ce qui simplifie la réalisation et la maintenance du dispositif. Chacun de ces mécanismes ne comporte qu'une seule genouillère, ce qui a pu être obtenu grâce à des encliquetages à galets et à l'emploi systématique de roulements à billes, ou à aiguilles pour les articulations chargées.

L'invention prévoit en outre, une semelle intermédiaire fixée sur l'avion par rapport à laquelle le dispositif d'emport peut s'orienter et sur laquelle il est assujetti. L'harmonisation en azimut, souvent nécessaire, peut donc être réalisée avec des moyens simples comme il sera décrit plus loin.

Pour bien faire comprendre l'ensemble de ces dispositions, on les décrira ci-après plus en détail, en référence au dessin annexé dans lequel:

la figure 1 représente schématiquement l'ensemble en perspective formé par le dispositif d'emport proprement dit et par la semelle intermédiaire fixée sous l'avion;

la figure 2 est une coupe longitudinale du dispositif d'accrochage et de déclenchement, la charge à deux anneaux étant mise en place et les crochets étant fermés;

la figure 3 représente la même coupe que la figure 2, mais en position de largage, les crochets étant ouverts;

la figure 4 représente une extension possible du dispositif pour l'emport de charges lourdes, comportant des anneaux à l'entraxe de 762 mm (30 pouces); et

la figure 5 représente la partie centrale du déclencheur de la figure 2, fortement agrandie pour bien faire apparaître les mécanismes.

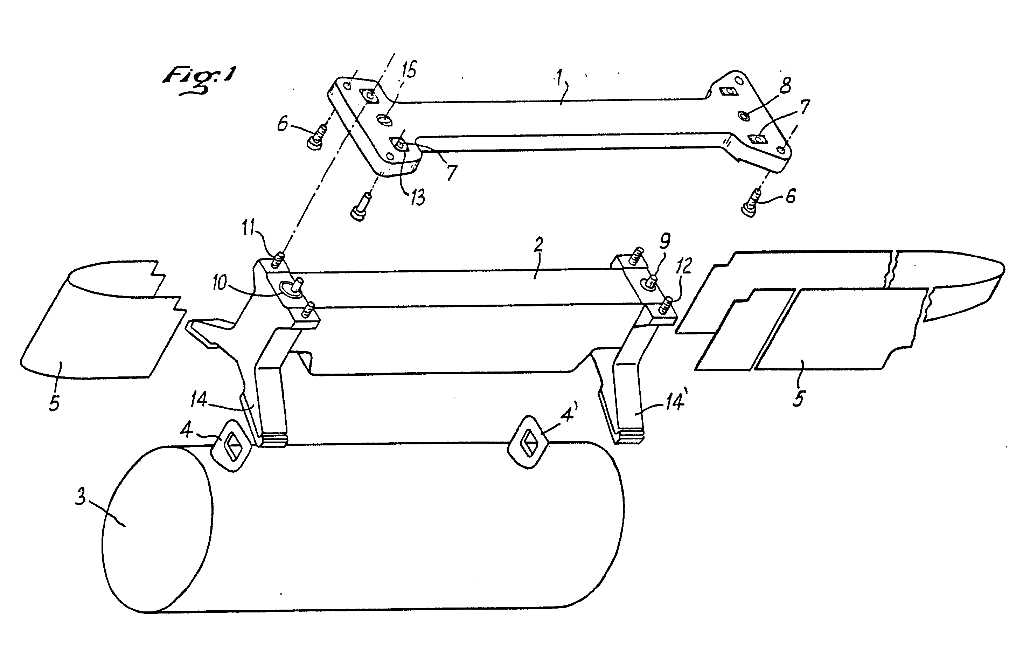

Sur la figure 1, on a représenté en 1 d'une façon schématique une semelle intermédiaire fixée sur l'avion, par exemple par des vis 6, passant dans des trous de la semelle et en 2 la silhouette du dispositif d'emport de la charge 3 munie de ses deux anneaux standards 4 et 4'. Aux deux extrémités du dispositif d'emport 2, on a prévu des blocs 14 et 14', servant d'appuis à la charge 3, lorsque celle-ci est à poste. Ces blocs sont traversés par des vis 11 et 12 pour la fixation du dispositif d'emport 2 sur la semelle 1, laquelle comporte les écrous correspondants 7, flottant dans des embrèvements oblongs 13.

L'orientation du dispositif d'emport 2, et en conséquence celle de la charge 3 par rapport à l'avion, est obtenue à l'aide de l'axe de rotation 9, fixé sur le bloc 14', et s'articulant dans le trou 8 correspondant prévu sur la semelle 1. Cette orientation est réglée au moyen d'un excentrique 10, manoeuvré à partir du bloc 14. Cet excentrique trouve son appui latéral dans le trou oblong 15, prévu sur la semelle 1. Lorsque la bonne orientation est obtenue, les vis 11 et 12 sont définitivement serrées. L'ensemble peut être complété par des carénages appropriés 5.

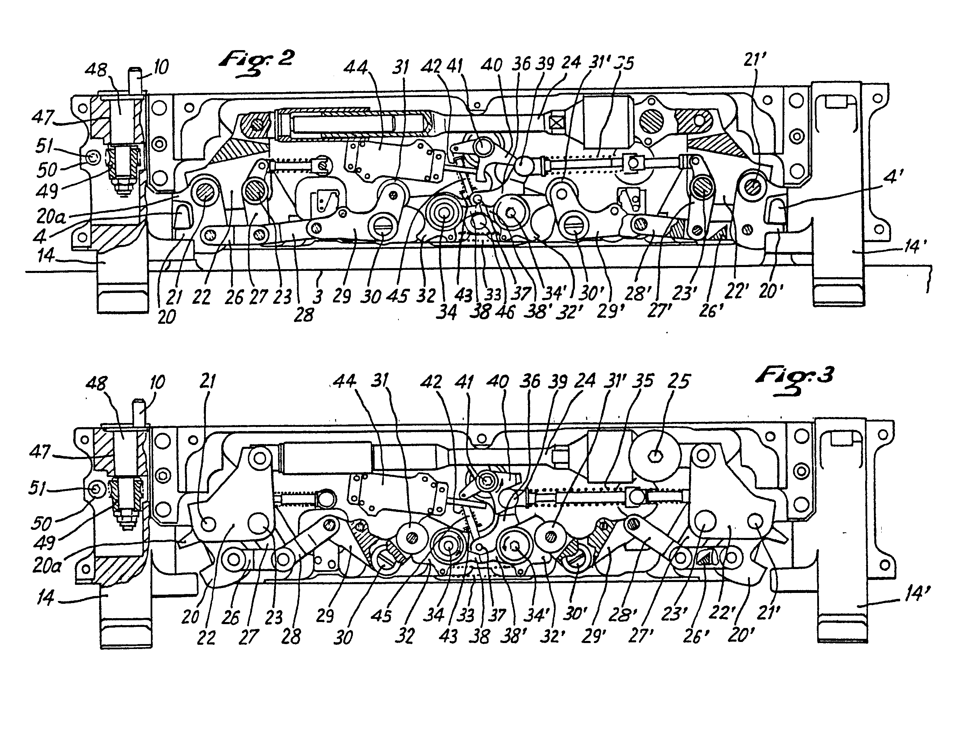

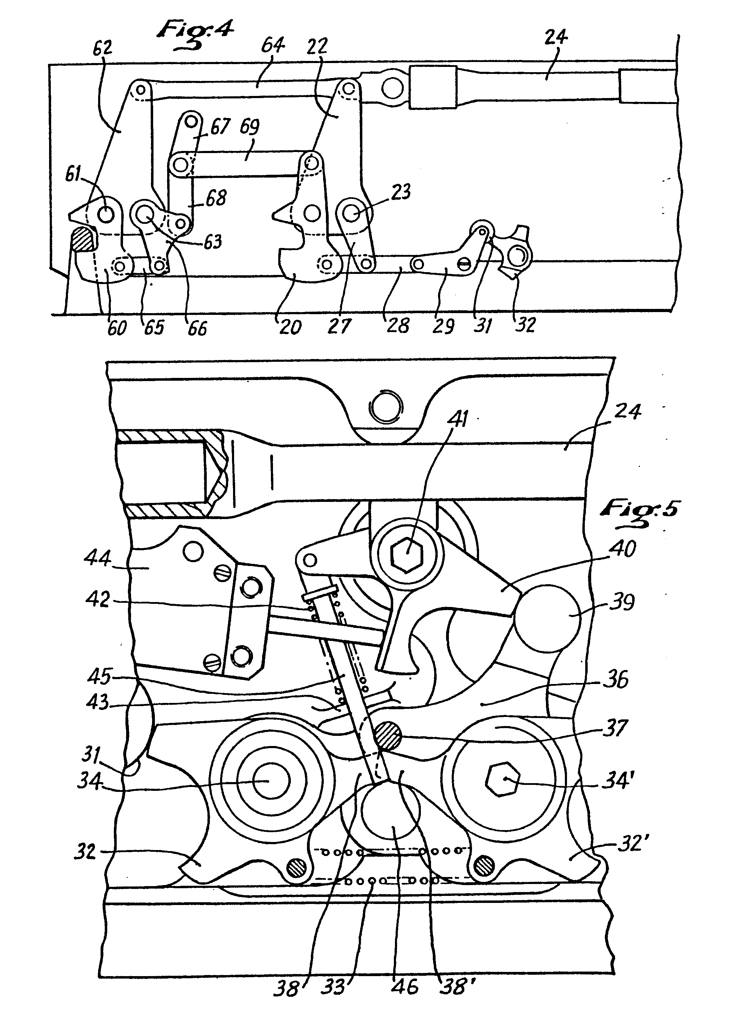

Sur la figure 2, on a représenté en 20 et 20' les crochets s'engageant respectivement dans les anneaux 4-4' de la charge et s'articulant en 21 et 21' sur les chapes 22 et 22', lesquelles pivotent sur des axes fixes 23 et 23' et sont embiellées à l'aide d'un tendeur à vis 24. La manoeuvre de ce tendeur s'effectue à l'aide d'un «six pans» 25, (figure 3) par exemple, d'un côté et (ou) de l'autre du dispositif comme on l'a décrit dans le brevet FR-A-24 13 267 de la même société. Ce tendeur joue un double rôle. D'une part, il équivaut à un palonnier répartissant également les efforts sur chacun des deux crochets, d'autre part, il permet par son extension ou sa rétraction d'abaisser ou de relever les crochets 20 et 20'.

Les crochets étant préalablement amenés en position basse, la charge, une fois accrochée, peut être appliquée contre les appuis fixes 14 et 14' par l'élévation complémentaire des crochets résultant d'une translation verticale de ces crochets obtenue par la rétraction du tendeur 24.

Un couple plus ou moins énergique, appliqué au niveau de la commande centralisée 25, permet de précontraindre l'ensemble en fonction des efforts aérodynamiques ou inertiels que le dispositif est susceptible de subir en utilisation. On a figuré en 26, 26' et 27, 27' les biellettes assurant la stabilité des crochets 20 et 20' et en 28, 28' et 29, 29' les éléments formant les genouillères démultiplicatrices d'effort. En 30 et 30', on a indiqué les tourillons autour desquels peuvent pivoter les pièces 29 et 29' porteuses des galets d'encliquetage 31 et 31'. Ces pièces peuvent être actionnées manuellement des deux côtés du dispositif pour obtenir l'encliquetage an l'absence de charge ou pour le parfaire le cas échéant par les fentes tourne-vis, représentées aux extrémités des tourillons 30 et 30'.

On a figuré en 32 et 32' les cames d'encliquetage et de déverrouillage rappelées dans la position représentée par un ressort commun 33. La rotation de ces cames dans le sens des flèches de la figure 3 autour des axes 34 et 34' provoque l'échappement des galets 31 et 31'. Cette rotation est obtenue par la libération d'un ressort énergique 35, agissant sur le renvoi 36 qui est articulé sur l'axe 34' et dont l'extrémité 37 agit simultanément sur les bras 38 et 38' des cames 32 et 32'. Ce ressort est lui-même maintenu en position rétractée par un galet 39, s'appuyant sur un renvoi 40, articulé en 41 et maintenu en position par un ressort en compression 42, prenant appui sur une butée 43. La rotation de ce renvoi 40 dans le sens de la flèche de la figure 3 est obtenue soit manuellement pour provoquer l'abandon de la charge au sol par une action sur le six pans représenté 41 ou sur celui situé de l'autre côté du dispositif, soit par l'action d'un électro-aimant 44, agissant dans le sens de la flèche sur le renvoi 40.

La tige 45 guidant le ressort 42 passe à travers la butée 43 et se prolonge jusqu'au bord du trou 46 de passage d'une broche de sécurité. Cette disposition est telle que la broche de sécurité, introduite par un flanc ou par l'autre du dispositif, empêche simultanément tout mouvement dans le sens du déverrouillage des deux cames 32 et 32' ainsi que la rotation du renvoi 40 ce qui immobilise le ressort 35 ainsi que l'électro-aimant 44, même si celui-ci est mis intempestivement sous tension.

On remarquera qu'un grand nombre de pièces 20 et 20', 21 et 21', 22 et 22', 23 et 23', 26 et 26', 27 et 27', 28 et 28' 29 et 29', 30 et 30', 31 et 31', 32 et 32' sont systématiquement identiques, la symétrie des mécanismes relatifs à chacun des crochets étant obtenue par leur simple retournement, ce qui limite le nombre de pièces différentes.

On remarquera également que les mécanismes démultiplicateurs se limitent à une seule genouillère par crochet, et que cette simplicité est due à l'emploi systématique d'encliquetages et d'échappements à galets, ainsi qu'au montage sur roulements à billes ou à aiguilles des articulations chargées.

Ces montages permettent le largage de charges importantes par l'action d'un électro-aimant 44 de faible encombrement, et de faible consommation.

Dans le bloc 14, on a figuré en 47 un alésage dans lequel peut s'orienter la pièce cylindrique 48, comportant à son extrémité supérieur l'excentrique 10 destiné à s'appuyer sur la semelle 1 par le trou oblong 15 figure 1, pour obtenir l'orientation voulue du dispositif d'emport 2. En 49, on a représenté une roue dentée solidaire de la pièce cylindrique 48. A cette roue correspond une vis tangente 50, d'axe transversal dont la commande peut être effectuée indifféremment par ses deux extrémités, à l'aide de six pans tel que 51. Pour simplifier et pour une meilleure compréhension du dessin, on n'a pas représenté l'équipement électrique habituel destiné à couper l'alimentation de l'électro-aimant après déclenchement, à signaler le déclenchement et à effectuer le report du courant de déclenchement au déclencheur suivant après ouverture des crochets.

Pour bien faire comprendre le fonctionnement du mécanisme, on a représenté sur la figure 3 les mêmes pièces que celles de la figure 2, mais dans la position correspondant aux crochets ouverts.

Le fonctionnement de l'électro-aimant 44 provoque la rotation, dans le sens de la flèche de la figure 3, du renvoi 40 contre le ressort 42. Le galet 39 poussé par le ressort 35 échappe, maintient le renvoi 40 en position de déclenchement et provoque la rotation simultanée des deux cames 32 et 32' dans le sens des flèches, et contre le ressort 33; les galets 31 et 31' échappent également en maintenant en position de déclenchement les cames 32 et 32' et permettent aux genouillères 28, 29 et 28', 29' de se briser sous l'action de la charge que supportent les crochets, lesquels s'ouvrent en pivotant autour des axes 21 et 21'.

L'accrochage d'une charge s'effectue de la façon inverse, mais on comprendra qu'il est nécessaire de réarmer préalablement le ressort 35 en agissant manuellement sur le six pans 34', de façon à ramener le galet 39 dans la position qu'il occupe sur la figure 2, ce qui permet au renvoi 40 de reprendre également la position de la figure 2 sous l'action du ressort 42. Comme il a déjà été dit, on amènera les crochets 20 et 20' en position basse par l'extension du tendeur 24, obtenue par le manoeuvre manuelle du six pans 25, de façon à faciliter l'accrochage de la charge. La charge est alors présentée de façon que ses anneaux 4 et 4' se trouvent à l'aplomb des crochets 20 et 20' soit simultanément, soit successivement. La charge étant soulevée, la partie supérieure de l'anneau 4 (ou 4') agit sur le contrebec 20a du crochet correspondant 20 et l'amène en position de fermeture. Si nécessaire, une action sur la fente tourne-vis des tourillons 30 assure cette fermeture par alignement de la genouillère 28-29. La came 32 sous l'action du ressort 33 reprend alors la position de verrouillage représentée à la figure 2. L'accrochage de l'anneau 4', s'il n'a pas été effectué simultanément, s'effectue dans un deuxième temps d'une façon analogue. L'introduction d'une broche de sécurité dans le trou 46 vérifie le bon positionnement des pièces. Le calage définitif de la charge sur les appuis 14 et 14' ainsi que la précontrainte de l'ensemble sont effectués par la rétraction du tendeur 24 obtenue par une action manuelle sur le six pans 25.

Il existe des charges lourdes comportant des anneaux d'accrochage à l'entraxe de 762 mm (30 pouces). De façon à pouvoir emporter indifféremment des charges relativement légères avec anneaux à l'entraxe de 355,6 mm (14 pouces), ou des charges lourdes avec anneaux à l'entraxe de 762 mm (30 pouces) sans surcharger le mécanisme déjà décrit, on a prévu, comme représenté sur la figure 4, une extension du dispositif comportant une genouillère de démultiplication complémentaire par crochet à 762 mm (30 pouces).

Sur cette figure 4, on n'a représenté que la démultiplication se rapportant au crochet de gauche et on comprendra qu'une démultiplication identique est prévue pour le crochet de droite. On a indiqué en 60 le crochet à 30 pouces articulé en 61 sur la chape 62 qui pivote sur l'axe 63. Cette chape 62 est reliée par une bielle 64 à la chape 22, déjà prévue pour le crochet à 14 pouces. Le crochet 60 est relié par une bielle 65 à un renvoi 66 articulé également en 63. On a indiqué en 67 et 68 les deux éléments d'une genouillère reliée par une bielle 69 au crochet 20 à 14 pouces.

Il est facile de voir que le dispositif de relevage des crochets 20 agit simultanément sur le relevage des crochets 60 comme on l'a déjà décrit dans le brevet français FR-A-24 13 267 de la même société mais l'effort exercé sur le crochet 60 est démultiplié de telle sorte que le mécanisme de déclenchement prévu pour les charges plus légères reste valable.

## Revendications

1. Dispositif d'emport et de largage de charges (3) sous avion du type à deux crochets (20, 20') à encliquetage indépendant, avec possibilité d'orientation de la charge (3) par rapport à l'avion (harmonisation en azimut) et de calage sur appuis fixes par relevage des crochets (20, 20'), caractérisé par un mécanisme actionné au moyen d'un électro-aimant (44) et comportant trois échappements à galets, dont un (31-32; 31'-32') pour chaque crochet (20-20') et un troisième (39-40) pour la libération d'un ressort de déclenchement (35).

2. Dispositif d'emport et de largage de charges sous avion selon la revendication 1, caractérisé par un mécanisme démultiplicateur d'efforts se réduisant à une genouillère (28-29; 28'-29') par crochet, les pièces se rapportant à chacun des deux crochets étant identiques.

3. Dispositif d'emport et de largage de charges sous avion selon la revendication 1 ou la revendication 2, caractérisé par une disposition des pièces telle que l'introduction de la broche de sécurité habituelle dans le trou (46) ménagé à cet effet assure non seulement le bon positionnement des cames d'encliquetage (32-32') des crochets, mais également celui de la pièce de retenue (36) du ressort de déclenchement (35) et le maintien en position rétractée de l'électro-aimant de commande (44), même si celui-ci est mis intempestivement sous tension.

4. Dispositif d'emport et de largage de charges selon l'une quelconque des revendications 1, 2 et 3, caractérisé par le fait qu'il comporte à une extrémité un axe d'articulation vertical (9) et à l'autre extrémité un excentrique (10) d'axe également vertical, dont la commande est réalisée par roue (49) et vis tangente transversale (50) accessible par les flancs du dispositif.

5. Dispositif d'emport et de largage selon l'une quelconque des revendications 1, 2, 3 et 4, caractérisé par le fait qu'il comprend une semelle intermédiaire (1) qui est fixée sur l'avion et qui comporte, outre les points de fixation du dispositif d'emport, un alésage (8) correspondant à l'axe d'articulation vertical (9) du dispositif d'emport et un trou oblong (15) correspondant à l'excentrique (10) du même dispositif, ce qui permet l'orientation de celui-ci.

6. Dispositif d'emport et de largage selon l'une quelconque des revendications 1, 2, 3, 4 et 5, caractérisé par le fait que toutes les commandes manuelles:
— harmonisation en azimut,
— réarmement du dispositif de déclenchement,
— encliquetage des crochets,
— relevage des crochets pour le calage de la charge,
— déclenchement manuel,
— introduction de la broche de sécurité,
peuvent se faire d'un côté comme de l'autre du dispositif.

7. Dispositif d'emport et de largage de charges selon l'une quelconque des revendications 1, 2, 3, 4, 5 et 6, caractérisé par le fait qu'une extension est possible pour l'emport de charges lourdes avec anneaux à l'entraxe de 762 mm (30 pouces) grâce à l'emploi d'une démultiplication d'effort complémentaire (67-68) au droit de chacun des crochets à 762 mm (30 pouces), de façon à ne pas surcharger le mécanisme de déclenchement commun prévu normalement pour des charges plus légères comportant des anneaux à 355,6 mm (14 pouces) d'entraxe.

8. Dispositif d'emport et de largage de charges selon la revendication 7, caractérisé par le fait que la démultiplication d'effort complémentaire (67-68) agit par un renvoi (66) dont l'axe fixe (63) est le même que celui d'une chape (62) de relevage d'un crochet à 762 mm (30 pouces).

## Patentansprüche

1. Trag- und Abwurfvorrichtung für Lasten (3) an einem Flugzeug mit Dreifach-Hemmungshebel, einschliesslich zwei unabhängiger Gesperrehaken (20, 20') und der Möglichkeit einer Ausrichtung der Last (3) in bezug auf das Flugzeug (Richtungsabgleich) sowie einer Verkeilung auf festen Auflagern durch Anheben der Haken (20, 20'), gekennzeichnet durch einen mittels Elektromagnet (44) betätigten Mechanismus mit drei Rollenfreigaben, davon eine (31, 32; 31', 32') für jeden Haken (20, 20') und eine dritte (39, 40) für die Freigabe einer Auslösefeder (35).

2. Trag- und Abwurfvorrichtung für Lasten an einem Flugzeug nach Anspruch 1, gekennzeichnet durch einen Kraftübersetzungsmechanismus, der sich auf ein Kniegelenk (28, 29; 28', 29') pro Haken reduziert, wobei die sich auf jeden der beiden Haken beziehenden Teile zeichnungsgleich sind.

3. Trag- und Abwurfvorrichtung an einem Flugzeug nach einem der vorhergehenden Ansprüche, gekennzeichnet durch eine Anordnung vom Teilen dergestalt, dass die Einführung des üblichen Sicherheitsdorns in das zu diesem Zweck vorgesehene Loch (46) nicht nur die richtige Einstellung der Sperrnocken (Einklinkscheiben) (32, 32') der Haken, sondern auch die des Halterungsteils (36) der Auslösefeder (35) sowie das Festhalten des Elektromagneten zum Betätigen (44) in eingezogener Stellung gewährleistet, selbst wenn dieser zu ungelegener Zeit unter Spannung gesetzt wird.

4. Trag- und Abwurfvorrichtung für Lasten an einem Flugzeug nach einem der vorhergehenden Ansprüche, dadurch gekennzeichnet, dass sie an einem Ende eine vertikale Gelenkachse (9) und am anderen Ende einen Exzenter (10) mit ebenfalls vertikaler Achse umfasst, deren Antrieb durch ein Schneckenrad (49) und eine Querschnecke (50) erfolgt, die über die Flanken der Vorrichtung zugänglich sind.

5. Trag- und Abwurfvorrichtung für Lasten an einem Flugzeug nach einem der vorhergehenden Ansprüche, dadurch gekennzeichnet, dass sie eine Zwischensohle (1) umfasst, die am Flugzeug befestigt ist und ausser den Befestigungspunkten der Tragvorrichtung eine Bohrung (8) entsprechend der vertikalen Gelenkachse (9) der Tragvorrichtung und ein Langloch (15) entsprechend dem Exzenter (10) der gleichen Vorrichtung aufweist, wodurch die Ausrichtung der letzteren möglich ist.

6. Trag- und Abwurfvorrichtung für Lasten an einem Flugzeug nach einem der vorhergehenden Ansprüche, dadurch gekennzeichnet, dass alle Betätigungen von Hand:
— Richtungsabgleich,
— Nachspannen der Auslösevorrichtung,
— Einklinken der Haken,
— Anheben der Haken zum Festkeilen der Last,
— Auslösen von Hand,
— Einführen des Sicherheitsdorns,
sowohl von der einen als auch von der anderen Seite der Vorrichtung erfolgen können.

7. Trag- und Abwurfvorrichtung für Lasten an einem Flugzeug nach einem der vorhergehenden Ansprüche, dadurch gekennzeichnet, dass eine Verlängerung zum Tragen schwerer Lasten mit Ringen im Abstand von 762 mm (30 Zoll) durch den Einsatz einer zusätzlichen Kraftübersetzung (67, 68) über jedem der Haken bei 762 mm (30 Zoll) möglich ist, und zwar so, dass der gemeinsame Auslösemechanismus, der normalerweise für leichtere Lasten mit Ringen in einem Abstand von 355,6 mm (14 Zoll) vorgesehen ist, nicht überlastet wird.

8. Trag- und Abwurfvorrichtung für Lasten an einem Flugzeug nach Anspruch 7, dadurch gekennzeichnet, dass die zusätzliche Kraftübersetzung (67, 68) auf ein Vorgelege (66) wirkt, dessen feste Achse (63) die gleiche ist wie die eines Bügels zum Anheben eines Hakens bei 762 mm (30 Zoll).

**Claims**

1. A device for carrying and releasing loads (3) below an aircraft, of the type with two independent ratchet hooks (20, 20'), enabling the load (3) to be oriented relative to the aircraft (azimuthal adaptation) and to be locked on fixed supports by raising the hooks (20, 21), declimatised by mechanism actuated by means of an electro-magnet (44) and comprising three roller releases, with one (31, 32; 31', 32') for each hook (20, 20') and a third (39, 40) for freeing an actuating spring (35).

2. A device for carrying and releasing loads below an aircraft as in claim 1, characterised by force reduction mechanism limited to one knuckle-joint (28, 29; 28', 29') per hook, with identical members applied to each of the two hooks.

3. A device for carrying and releasing loads below an aircraft as in claim 1 or claim 2, characterised by disposition of members such that introduction of the normal security pin into the hole (46) provided for this purpose ensures not only correct positioning of the hook ratchet cams (32, 32') but also that of the retaining member (36) for the actuating spring (35), and the holding in retracted position of the controlling electro-magnet (44), even if the latter has been prematurely energised.

4. A device for carrying and releasing loads as in any of claims 1, 2 or 3, characterised in comprising at one end a vertical pivot shaft (9) and at the other end a cam (10), also with vertical shaft, whose control is effected by a wheel (49) and transverse tangential screw (50) accessible from the sides of the device.

5. A device for carrying and releasing as in any of claims 1, 2, 3 or 4, characterised in comprising an intermediate sole plate (1) affixed to the aircraft and which in addition to the attachment points for the carrying device has a bore (8) corresponding to the vertical pivot shaft (9) of the carrying device, and an oblong cavity (15) corresponding to the cam (10) of the same device and permitting orientation thereof.

6. A device for carrying and releasing as in any of claims 1, 2, 3, 4 or 5, characterised in that all the manual controls:
— azimuthal adaptation
— resetting of the actuation device
— ratchetting of the hooks
— raising the hooks to lock the load
— manual actuation
— insertion of security pin
can be effected from either side of the device.

7. A device for carrying and releasing loads as in any of claims 1, 2, 3, 4, 5 or 6, characterised in that extension is possible for carrying heavy loads with rings having axes 762 mm apart by means of using supplementary force reduction mechanism (67, 68) aligned with each of the hooks 762 mm apart, so as not to overload the actuation mechanism normally provided for lighter loads and having rings with axes 355.6 mm apart.

8. A device for carrying and releasing loads as in claim 7, characterised in that the supplementary force reduction mechanism (67, 68) operates by counter-shaft means (66) whose fixed axis (63) is the same as that of a strap (62) for raising a 762 mm hook.

Fig.1

0 144 265

Fig. 2

Fig. 3

0 144 265

*Fig:4*

*Fig:5*

11